Europäisches Patentamt

(19) European Patent Office

Office européen des brevets

(11) Publication number: **0 064 077**
**B1**

(12) # EUROPEAN PATENT SPECIFICATION

(45) Date of publication of patent specification: **05.02.86**

(51) Int. Cl.⁴: **A 23 B 4/00**

(21) Application number: **81903132.9**

(22) Date of filing: **09.11.81**

(86) International application number:
**PCT/DK81/00098**

(87) International publication number:
**WO 82/01640 27.05.82 Gazette 82/14**

(54) **A PROCESS FOR INCORPORATING INTO MEAT SUBSTANCES WHICH ARE PRESENT IN A DISSOLVED, SUSPENDED AND/OR PULVERIZED SOLID STATE.**

(30) Priority: **11.11.80 DK 4781/80**

(43) Date of publication of application:
**10.11.82 Bulletin 82/45**

(45) Publication of the grant of the patent:
**05.02.86 Bulletin 86/06**

(84) Designated Contracting States:
**DE FR GB NL**

(56) References cited:
**DE-A-2 532 336**
**DE-A-2 615 003**
**DK-B- 117 122**
**SE-A-72 000 231**
**SE-A-73 065 948**
**SE-B- 357 875**

(73) Proprietor: **Slagteriernes Forskningsinstitut**
**Maglegaardsvej 2**
**DK-4000 Roskilde (DK)**

(72) Inventor: **JENSEN, Jens-Lauge Bolund**
**Apoteket, Adelgade 56**
**DK-4880 Nysted (DK)**

(74) Representative: **Hardisty, David Robert et al**
**BOULT, WADE & TENNANT 27 Furnival street**
**London EC4A IPQ (GB)**

Courier Press, Leamington Spa, England.

## Description

The process relates to a process for incorporating into meat substances which are present in a dissolved, suspended and/or pulverised solid state, wherein the meat is subjected to a mechanical treatment in the presence of the substances to be incorporated.

Substances are often incorporated into meat in order to enhance its properties, e.g., meat is cured in order to improve its keeping qualities, taste and colour.

A number of methods is known in this respect. One of the known curing methods is to place the meat in an aqueous brine solution for several days enabling the meat to absorb an amount of the brine. A faster curing method is to inject the brine into the meat through a number of hollow needles. This method, the so-called multi-needle injection method, requires a subsequent storage of the meat having the brine in cavities in order to obtain a dispersion and binding of brine in the meat.

In the production of canned hams and canned shoulders massaging or tumbling of the meat after injection is preferred. The meat is then canned and allowed to stand for about 24 hours before autoclaving. The massaging or tumbling is especially used in order to make the meat more supple and to achieve an exudate resulting in a binding of the individual meat muscles after autoclavation. In this way a full-squared coherent product is obtained.

DE—A—2615003 describes an apparatus for curing meat, comprising a tenderiser and a vacuum tumbler. The meat is tenderised while passing two knife rollers and transported to the tumbling container which contains the brine. The lid of the container is closed airtight. The container is vacuumised and then rotated for several hours to permit the meat to absorb the brine and produce an exudate on the surface. The meat may then be packed, stored and heat treated as stated above.

Furthermore, it is known to incorporate salt into e.g., whole hams by rubbing a dry salt mixture into the surface of the hams. This rubbing is usually repeated in order to enable the salt to be incorporated into the meat as uniformly as possible and in the amount desired.

However, all the methods described above have one disadvantage in common, they are time consuming and occupy costly production equipment, storage facilities and labour for quite a long time.

The object of the invention is therefore to provide improvements of the known processes for incorporating into meat substances which are present in a dissolved, suspended and/or pulverised solid state.

Accordingly, the present invention provides a process for incorporating into meat substances which are present in a dissolved, suspended and/or pulverised solid state wherein the meat is subjected to a mechanical treatment in the presence of the substances to be incorporated, characterised in that the meat in the form of one or several pieces is placed in a film packing together with the substances which, if desired, have been wholly or partly injected or introduced into the meat, air and gas are then partially removed from the packing, which is then sealed in an airtight manner and thereafter the soft package so produced with its content of meat and substances is subjected to mechanical treatment, preferably in a tumbler or a massaging vat, until the said substances have been incorporated into the meat.

"Incorporation" means here working in and introduction of the substances to such an extent that they are bound in the meat, and preferably uniformly dispersed therein. Preferably, it should be impossible to rub them out again.

In the process of the invention there exists very favourable conditions for the transfer of material, such as brine, into the muscle tissue of the meat. The meat and the unbound substances are brought into close contact with each other because the substances are maintained in a thin layer in contact with the meat by means of the inside of the packing. At the same time a quick transport of the material in this layer takes place caused by the repeated deformation of the package which will increase the transfer. Besides, the mechanical treatment of the meat will favourably affect the transport of the material in the meat itself, because the substances which have been injected in certain areas of the meat are forced out into the surrounding meat. Substances and meat juice which have been completely forced out of the meat, are caught by the packing and go back into the meat.

The process according to the invention enables therefore a quick incorporation of the substances with no loss of meat juice, the reason why the weight gain of the meat may be fixed accurately. When first sealed in the packing the meat is further protected from any contamination of for example, microorganisms and also from the influence of the air.

The process according to the invention is preferably used in connection with fresh meat having good water and juice binding properties, but may be used in thawed meat, also. Processed meat may be used in the process of this invention. For example, it may have been subjected to electrical or mechanical tenderising or may have been salted.

Meat to be treated in accordance with the process of the invention may derive from mammal such as pigs, cattle or sheep, or from poultry or fish.

The meat may be present in the form of whole and/or parts of muscle or muscle groups, i.e., pieces weighing from a few grams up to several kilograms. The process according to the invention is advantageously applied on pieces of meat weighing more than 1 gram, especially more than 10 grams and in particular more than 30 grams.

If the meat is mainly present in the form of pieces each weighing more than 1 gram, especially more than 10 grams, but not exceeding 1 kilogram, the process is preferably performed so that several of such pieces of meat are placed in the film packing. A very flexible package is obtained in this way enabling the substances to be distributed over the relatively large surface of the meat pieces. The substances are rapidly incorporated into the meat during the mechanical treatment. This embodiment of the invention may be applied in connection with manufacturing of products substantially consisting of lean meat such as fore end rolls but may also be advantageously applied to mixtures containing pieces of meat of the said sizes such as comminuted meat mixtures containing pieces of meat and fat.

The process according to the invention is especially well utilised in connection with meat pieces each weighing more than 0.2 kilograms, preferably more than 1 kilogram, because the known methods of incorporation of substances into such pieces of meat are particularly time consuming.

If the meat is present in the form of pieces of meat each weighing more than 0.2 kilograms, in particular more than 1 kilogram, the process according to the invention is preferably performed by placing one single piece of meat in the film packing. The whole surface of such a piece is immediately exposed to mechanical treatment and a uniform processing is achieved. If the film packing furthermore is made to lie relatively firm against the meat itself, an improved rigidity in the case of flat long pieces of meat is achieved. This may be advantageous if the mechanical treatment is carried out as tumbling or massaging.

Preferably 0.2 to 20 kilograms, and more preferably, 1 to 10 kilograms, of meat is placed in the film packing; within the stated weight ranges a particular uniform incorporation of the substances is obtained by the mechanical treatment, without damaging the surface of the meat.

The process according to the invention may thus be utilized on both whole meat, such as cuts in the form of whole hams, fore loins, tongues and bacon cuts as well as minor pieces of meat which are to be restructured into one combined larger piece of meat such as canned hams by heat treatment or extrusion.

The substances which are incorporated into the meat according to the process of the invention may be the substances conventionally used in the meat industry for enhancing the keeping qualities, colour, taste, aroma and/or consistency of the meat or for reducing the cost price of a meat product. These substances may be preservatives, antioxidants, colouring and flavouring constituents, fragrances, consistency improving agents, meat substitutes and/or water.

Preservatives and antioxidants may for example be salts of inorganic acids such as sodium chloride, sodium nitrite and potassium nitrate or salts of organic acids such as potassium sorbate and sodium ascorbate as well as acids such as sorbic acid, ascorbic acid and lactic acid. If desired, microorganisms may be used capable of producing preservatives such as lactic acid producing cultures.

Other examples of preservatives and antioxidants are esters, especially esters of one of the above mentioned organic acids.

Consistency improving agents which may be used in the process according to the invention are, e.g., phosphates, starches and vegetal or animal protein products, such as soy protein, caseinate and blood plasma.

As an example of flavouring constituents and fragrances may be mentioned natural condiments, seasoning extracts and synthetic condiments, liquid smoke compositions included. Further, there may be mentioned saccharides and hydrolyzed proteins as well as flavour and fragrance improving agents such as glutamic acid and monosodium glutamates.

According to the process of the invention the substances may be incorporated separately or in a mixture and/or in one or several steps.

The amount used is the usual one for such substances, i.e., generally ranging from a few milligrams to several hundred grams per kilogram meat. Substances which are to be incorporated into the meat in a large amount are usually soluble in water and may advantageously be incorporated in a dissolved state. Substances which are insoluble in water are as a rule used dispersed in water or in an aqueous solution of the remaining substances which are to be incorporated. If desired or necessary, the substances may be used in a pulverised state, too, such as a powder or fine crystals, i.e. as a dry salt mixture.

Finally, part of the substances may be used in a solution while the remaining is added in a pulverised state.

According to the process of the invention the substances which are to be incorporated may be positioned in the meat or placed on its surface before it is placed in the packing. The meat may, e.g., be multi-needle injected with a brine and/or the meat may be rubbed with a dry salt mixture before it is placed in the packing.

Alternatively, the meat may be placed in the packing with subsequent dosing of the substances into the packing, e.g. by multi-needle injection of the meat placed in an open packing or by pouring the dry mixture and/or the curing brine into the packing. The two embodiments may also be combined, e.g., the meat is first multi-needle injected and then placed in an open packing, whereafter the dry salt mixture is poured into the packing.

The film packing used in the process of the invention should be made of a material suitable for food stuffs, e.g., of a plastic material such as a polyolephine, e.g., polyethylene, a polyester or a polyamide, e.g., nylon. Aluminium foil may also be used. The packing may be made of one or several similar or different layers and may have the shape of a sheet, a bag or be tubular. According to Claim 5 a bag or a section of a tubular film is used as the film packing, preferably a plastic bag or a section of a plastic tubular film. The usual packing products may therefore be used, deep drawn films included.

Removal of air and sealing of the filled packing may advantageously be performed in one of the usual vacuum packaging machines. It is important to leave some air or gas in the package thus produced in order to make it compressible and workable. The amount of the remaining air or gas should, however, not be larger than necessary for ensuring a soft package. In other words the partial removal of air or gas from the filled package is performed to such an extent that practically all air or gas is removed from the filled packing before or during the sealing but the package should still remain flexible. This state may be achieved in the vacuum packaging machines by adjusting to a weak vacuum. Alternatively, the removal of air and sealing of the packing may be carried out by rolling or squeezing the air out of the package and then seal it. This embodiment is particularly useful in tubular film packings.

The packing is advantageously sealed by rounded seams. In this way the risk of producing enclosures in the package itself is strongly reduced.

In order to increase the flexibility of a package, it is furthermore advantageous to flatten the packing with its content of meat and substances, which are to be incorporated, before or during the sealing operation, thus creating a better possibility for the piece or pieces of meat to slide relatively to the film package and promoting a uniform incorporation.

The next step of the process according to the invention is a mechanical treatment of the package produced until the substances have been substantially absorbed and bound and as a rule been uniformly dispersed in the meat.

For this purpose massaging vats, known from the food processing industry are preferably used. Several packages are subjected to a mechanical treatment in a rotating tumbler or a tank having a movable agitator, if desired.

The time of treatment in these apparatuses depends on the size and flexibility of the packages and pieces of meat, the amount of substances which are to be incorporated, their nature as well as on the kind of meat and former processing. This period of time of treatment should on one hand be sufficiently long to enable the substances to be absorbed and dispersed in the meat, but on the other hand not be longer than enabling the meat to maintain its physical structure.

An advantageous embodiment of the process according to the present invention for incorporating a brine and, if desired, a dry salt mixture into meat pieces each weighing more than 0.2 kilograms, in particular more than 1 kilogram, such as whole hams, fore loins and bacon cuts, is characterised in that a piece of meat is placed in a film packing, the meat is multiply injected with the brine and the salt mixture, if desired, is added before or after the meat is placed in the film packing, air is partially removed from the packing which then is sealed in an airtight manner and thereafter several of the soft packages so-produced with their content of meat, brine and possibly the dry salt mixture are subjected to the mechanical treatment preferably in a tumbler or massaging vat.

After the working mentioned before in, e.g., a tumbler or massaging vat the packages are removed from the apparatus. The packages may be further processed and handled without the risk of losing some of the incorporated substances or meat juices due to drip loss or evaporation.

The meat may advantageously be processed further in the original packing. For example ham and pieces of ham may be cooked in the packing whereby a firm product capable of being sliced after removal of the packing is obtained. Before cooking the packages may be placed in cans or moulds, thus obtaining a product of a desired cross section.

The process according to the present invention is illustrated by the following example:—

## Example

Bones, course sinews and inner fat are removed from chilled whole hams. A hundred hams each weighing between four and six kilograms are multi-needle injected on the meat side with a curing brine until a weight gain of 8 per cent is achieved. The curing brine consists of 16 kilograms NaCl, 150 grams $NaNO_3$, 30 grams $NaNO_2$, 1 kilogram dextrose, 1 kilogram corn syrup solids, 500 grams lactic acid producing cultures ("Pokelfermente 77") and 100 l water.

The injected hams are each put in a polyethylene bag having rounded corners, 50 grams dry salt mixture per kilogram of meat are poured into each of the bags. This mixture consists of 23 kilograms NaCl, 40 grams $NaNO_2$, 1.5 kilograms dextrose and 1.5 kilogram corn syrup solids.

Air is partially removed from these bags in a vacuum packaging machine and the open ends are sealed. The packages contain a few air bubbles. The packed hams are put in a massaging vat.

After 20 hours of agitating at 4 revolutions per minute the agitator is stopped and the hams are removed and stored in a cold room for 14 days. The plastic bags are then removed and the hams are stored again for another 14 days.

The stored hams are steeped in a cold water bath for two hours, rinsed in hot water of 60°C and then cold smoked.

After a smoking period of seven days the hams are finished and may be put on the market. These hams have the aroma, appearance and consistency corresponding to the so-called Westphalian hams, whose production normally demands a — usually manual — total production time of two to three months, in contradiction to the mechanical treatment of one month only according to the present invention.

## Claims

1. A process for incorporating into meat substances which are present in a dissolved, suspended and/or pulverized solid state wherein the meat is subjected to a mechanical treatment in the presence of the substances to be incorporated, characterised in that the meat in the form of one or several pieces is placed in a film packing together with the substances which, if desired, have been wholly or partly injected or introduced into the meat, air and gas are then partially removed from the packing, which is then sealed in an airtight manner and thereafter the soft package so produced with its content of meat and substances is subjected to mechanical treatment, preferably in a tumbler or a massaging vat, until the said substances have been incorporated into the meat.

2. A process so claimed in Claim 1, wherein the meat is substantially present in the form of pieces of meat each weighing more than 1 gram, preferably more than 10 grams, but not exceeding 1 kilogram, characterised in that several of such pieces of meat are placed in the film packing.

3. A process as claimed in Claim 1, wherein the meat is present in the form of pieces of meat each weighing more than 0.2 kilograms, preferably more than 1 kilogram, characterised in that one single piece of meat is placed in the film packing.

4. A process as claimed in any one of the preceding claims, characterised in that an amount of 0.2—20 kilograms, preferably, 1—10 kilograms of meat, are placed in the film packing.

5. A process as claimed in any one of the preceding claims, characterised in that a bag or a section of a tubular film is used as the film packing, preferably a plastic bag or a section of a plastic tubular film.

6. A process as claimed in any one of the preceding claims, characterised in that the packing is sealed with rounded seams.

7. A process as claimed in any one of the preceding claims, characterised in that the packing with its content of meat and substances, which are to be incorporated, is flattened before or during the sealing operation.

8. A process as claimed in any one of Claims 3—7 for incorporating a brine and, if desired, a dry salt mixture into meat pieces each weighing more than 0.2 kilograms, in particular more than 1 kilogram, such as whole hams, fore loins and bacon cuts, characterised in that a piece of meat is placed in a film packing, the meat is multiply injected with the brine, the salt mixture, if desired, is added before or after the meat is placed in the film packing, air is partially removed from the packing which then is sealed in an airtight manner and thereafter several of the soft packages so-produced with their content of meat, brine and possibly the dry salt mixture are subjected to the mechanical treatment preferably in a tumbler or massaging vat.

**Revendications**

1. Procédé pour incorporer dans la viande des substances qui sont présentés en solution, en suspension et/ou à l'état solide pulvérisé, dans lequel la viande est soumise à un traitement mécanique dans la présence des substances à incorporer, caractérisé en ce que la viande en forme d'un ou de plusieurs morceaux est mise dans un emballage de film avec les substances qui, si on le désire, ont été injectées ou ajoutées à la viande, entièrement ou partiellement, après quoi air et gaz sont partiellement enlevés de l'emballage qui est ensuite fermé hermétiquement et puis le paquet mou ainsi produit avec son contenu de viande et de substances est soumis à un traitement mécanique, préférablement dans un tumbler ou un récipient massant jusqu'à l'incorporation des substances mentionnées dans la viande.

2. Procédé selon la revendication 1, dans lequel la viande est en effet présente en forme de morceaux de viande, chacun pesant plus de 1 g, préférablement plus de 10 g, mais non pas dépassant 1 kg, caractérisé en ce que plusieurs de tels morceaux de viande sont mis dans l'emballage de film.

3. Procédé selon la revendication 1, dans lequel la viande est présente en forme de morceaux de viande, chacun pesant plus de 0,2 kg, préférablement plus de 1 kg, caractérisé en ce qu'un seul morceau de viande est mis dans l'emballage de film.

4. Procédé selon l'une quelconque des revendications précédentes, caractérisé en ce qu'une quantité de 0,2 à 20 kg. préférablement 1 à 10 kg de viande, est mise dans l'emballage de film.

5. Procédé selon l'une quelconque des revendications précédentes, caractérisé en ce qu'un sac ou une partie de film tubulaire est utilisé pour l'emballage de film, préférablement un sac de plastique ou une partie de film tubulaire en plastique.

6. Procédé selon l'une quelconque des revendications précédentes, caractérisé en ce que l'emballage est fermé à l'aide de clous ronds.

7. Procédé selon l'une quelconque des revendications précédentes, caractérisé en ce que l'emballage avec son contenu de viande et de substances à incorporer sera plati avant ou pendant l'opération de fermeture.

8. Procédé selon l'une quelconque des revendications de 3 à 7 pour incorporer une saumure de salaison et, si on le désire, un melange sec de sel, dans des morceaux de viande, qui chacun pèse plus de 0,2 kg, en préférence plus de 1 kg, tels que des jambons entiers, des carrés et de pièces de bacon, caractérisé en ce que un morceau de viande est mis dans un emballage de film, la saumure de salaison est injectée plusieurs fois dans la viande, le melange de sel est ajouté, si on le désire, avant ou après la mise en film de la viande, air est partiellement enlevé de l'emballage qui est ensuite fermé hermétiquement et puis plusieurs des paquets mous ainsi produits avec leur contenu de viande, de saumure de salaison et éventuellement de melange sec de sel sont soumis à un traitement mécanique, de préférence, dans un tumbler ou dans un récipient massant.

## Patentansprüche

1. Verfahren zum Einverleiben im Fleisch von Substanzen, die in gelöster, dispergierter und/oder pulverisierter fester Form vorliegen, wobei das Fleisch in Anwesenheit der einzuverleibenden Substanzen einer mechanischen Behandlung unterzogen wird, dadurch gekennzeichnet, dass das Fleisch in Form von einem oder mehreren Stücken zusammen mit den Substanzen in einer Folienverpackung angebracht wird, die — wenn erwünscht — ganz oder teilweise in das Fleisch eingespritzt oder dem Fleisch zugesetzt worden sind, dass Luft und Gas teilweise aus der Verpackung entfernt werden, dass die Verpackung dann hermetisch verschlossen wird, wonach die so hergestellte weiche Packung mit ihrem Gehalt an Fleisch und Substanzen einer mechanischen Behandlung unterzogen wird, vorzugsweise in einer Trommel oder Massierbehälter, bis die Substanzen im Fleisch einverleibt worden sind.

2. Verfahren nach Anspruch 1, wobei das Fleisch hauptsächlich in Form von Fleischstücken, die je mehr als 1 g, vorzugsweise mehr als 10 g, aber nicht mehr als 1 kg wiegen, vorhanden ist, dadurch gekennzeichnet, dass mehrere solcher Fleischstücke in der Folienverpackung angebracht werden.

3. Verfahren nach Anspruch 1, wobei das Fleisch in Form von Fleischstücken, die je mehr als 0,2 kg, vorzugsweise mehr als 1 kg wiegen, vorhanden ist, dadurch gekennzeichnet, dass ein einzelnes Fleischstück in der Folienverpackung angebracht wird.

4. Verfahren jedem der vorhergehenden Ansprüche, dadurch gekennzeichnet, dass eine Menge von 0,2—20 kg, vorzugsweise 1—10 kg, Fleisch in der Folienverpackung angebracht wird.

5. Verfahren nach jedem der vorhergehenden Ansprüche, dadurch gekennzeichnet, dass ein Beutel oder ein Abschnitt einer Schlauchfolie als Folienverpackung verwendet wird, vorzugsweise ein Kunststoffbeutel, oder ein Abschnitt einer Kunststoffschlauchfolie.

6. Verfahren nach jedem der vorhergehenden Ansprüche, dadurch gekennzeichnet, dass die Verpackung mit abgerundeten Nähten verschlossen wird.

7. Verfahren nach jedem der vorhergehenden Ansprüche, dadurch gekennzeichnet, dass die Verpackung mit ihrem Gehalt an Fleisch und den im Fleisch einzuverleibenden Substanzen vor oder während der Verschliessung flachgedrückt wird.

8. Verfahren nach jedem der vorhergehenden Ansprüche 3—7 zum Einverleiben einer Pökellake und — wenn erwünscht — eines trockenen Salzgemisches in Fleischstücken wie z.B. ganzen Schinken, Kotelett- und Baconstücken, die je mehr als 0,2 kg, vorzugsweise mehr als 1 kg wiegen, dadurch gekennzeichnet, dass ein Fleischstück in einer Folienverpackung angebracht wird, und das Fleisch mit der Pökellake vielfach eingespritzt wird, wobei das Salzgemisch dem Fleisch — wenn erwünscht — vor oder nach dem Anbringen in der Folienverpackung zugesetzt wird, wonach die Luft teilweise aus der Verpackung entfernt wird, dass die Verpackung hermetisch verschlossen wird, wonach mehrere der so hergestellten Packungen mit ihrem Gehalt an Fleisch, Pökellake und möglicherweise trockenem Salzgemisch einer mechanischen Behandlung, vorzugsweise in einem Trommel oder Massierbehälter, unterzogen werden.